# Europäisches Patentamt

## European Patent Office

## Office européen des brevets

(11) Veröffentlichungsnummer: **0 200 029**
**B1**

(12) # EUROPÄISCHE PATENTSCHRIFT

(45) Veröffentlichungstag der Patentschrift:
25.01.89

(51) Int. Cl.⁴: **C 08 C 19/02**

(21) Anmeldenummer: **86104674.6**

(22) Anmeldetag: **05.04.86**

(54) Verfahren zur Hydrierung nitrilgruppenhaltiger ungesättigter Polymerer.

(30) Priorität: **20.04.85 DE 3514403**

(43) Veröffentlichungstag der Anmeldung:
**05.11.86 Patentblatt 86/45**

(45) Bekanntmachung des Hinweises auf die Patenterteilung:
**25.01.89 Patentblatt 89/4**

(84) Benannte Vertragsstaaten:
**DE FR GB IT**

(56) Entgegenhaltungen:
**DE-A-3 227 650**

**JOURNAL OF POLYMER SCIENCE: POLYMER PHYSICS EDITION, Band 17, 1979, Seiten 1211-1222, John Wiley & Sons, Inc., New York, US; H. RACHAPUDY et al.: "Properties of amorphous and crystallizable hydrocarbon polymers. III. Studies of the hydrogenation of polybutadiene"**
**CHEMICAL ABSTRACTS, Band 101, 1984, Seite 76, Nr. 92542h, Columbus, Ohio, US; G. SCHULZ et al.: "The heterogeneous hydrogenation of polyisoprene"**

(73) Patentinhaber: **BAYER AG, Konzernverwaltung RP Patentabteilung, D-5090 Leverkusen 1 Bayerwerk (DE)**

(72) Erfinder: **Buding, Hartmuth, Dr., Liebermannstrasse 1, D-4047 Dormagen (DE)**
Erfinder: **Casper, Rudolf, Prof. Dr., St. Ingberter-Strasse 3a, D-5090 Leverkusen (DE)**

EP 0 200 029 B1

## Beschreibung

Die Erfindung betrifft ein Verfahren zum Hydrieren nitrilgruppenhaltiger ungesättiger Polymerer unter Erhalt der Nitrilgruppen.

In der US-PS-3 700 637 wird die Hydrierung von Acrylnitril-Butadien-Copolymeren mit homogenen Katalysatoren beschrieben; die Hydrierung mit heterogenen Katalysatoren, beispielsweise mit Palladium auf Kohle, Diatomeenerde, Aluminiumoxid, Silikat oder Asbest wird als möglich erwähnt.

Aus der DE-OS-3 046 008 ist bekannt, Acrylnitril-Butadien-Copolymere mit Palladium und zumindest einem weiteren Metall zu hydrieren, wobei die Metalle auf einem porösen, pulverförmigen oder körnchenförmigen Träger niedergeschlagen sind, beispielsweise Diatomeenerde oder aktiviertem Kohlenstoff.

In der DE-OS-3 227 650 wird die Hydrierung von Acrylnitril-Butadien-Copolymeren mit Hydrierkatalysatoren auf der Basis von Siliciumdioxid beschrieben, welches ausgewählte Porendurchmesser aufweist.

Die Vorgeschlagenen Trägermaterialien für die heterogenen Hydrierkatalysatoren für Acrylnitril-Butadien-Copolymere sind von poröser Struktur und haben damit den Nachteil, mechanisch von geringer Festigkeit zu sein, d. h. sie konnen nicht mehrfach mit Erfolg verwendet werden, weil durch die mechanische Beanspruchung ein Feinkornsnteil entsteht, der entweder das Hydrierprodukt verunreinigt oder die Aufarbeitung erheblich erschwert.

Es wurde nun überraschenderweise gefunden, daß mit bestimmten nichtporösen Trägermaterialien die Hydrierung von Acrylnitril-Butadien-Copolymeren mit wenigstens gleich gutem Hydriergrad gelingt. Der erfindungsgemäß verwendete Hydrierkatalysator zeichnet sich durch hohe mechanische Stabilität aus und kann somit leicht wieder gewonnen und oft wiederverwendet werden.

Gegenstand der ist daher ein Verfahren zur heterogenen katalytischen Hydrierung nitrilgruppenhaltiger ungesättiger Polymerer in Lösung bei 0 bis 200°C und 1 bis 350 bar Wasserstoffdruck unter Erhalt der Nitrilgruppen, dadurch gekennzeichnet, daß als Hydrierkatalysator Palladium auf Erdalkalicarbonaten verwendet wird, daß die spezifische Oberfläche (BET) des Katalysators kleiner als 100 m$^2$/g ist und daß die Menge des auf dem Erdalkalicarbonat niedergeschlagenen Palladiums 0,01 bis 20 Gew.-% und die Konzentration an Katalysator (berechnet als Palladium), bezogen auf Polymer, 5 bis 20.000 ppm beträgt.

Der Katalysator wird nach üblichen Methoden aus Erdalkalicarbonat, insbesondere aus besonders reinem Erdalkalicarbonat, und Palladium hergestellt, beispielsweise durch Suspendieren des Erdalkalicarbonats in Wasser, Zugeben einer geeigneten Palladiumsalzlösung und Niederschlagen des Palladiums auf den Träger. Der Katalysator kann in oxidischer oder reduzierter Form zur erfindungsgemäßen Hydrierung eingesetzt werden. Die oxidische Form ist aufgrund der guten Lagerfähigkeit und Aktivität die bevorzugte Katalysatorform. Die Reduktion der oxidischen Form erfolgt erst unmittelbar vor oder während der eigentlichen Hydrierung des Substrats.

Der Katalysator kann mit weiteren Metallen oder Verbindungen in seiner Wirkung verstärkt oder abgeschwächt werden. Die spezifische Oberfläche (BET) des Katalysators ist kleiner als 100 m$^2$/g, bevorzugt kleiner als 50 m$^2$/g, insbesondere kleiner als 30 m$^2$/g.

Die Menge des auf dem Erdalkalicarbonat niedergeschlagenen Palladiums beträgt 0,01 bis 20 Gew-%, bevorzugt 0,1 bis 15 Gew.-%. Die Konzentration an Katalysator (berechnet als Palladium), bezogen auf Polymer, beträgt 5 bis 20 000 ppm, bevorzugt 50 bis 15 000 ppm. Die Konzentration der Polymerlösung beträgt 1 bis 50 Gew.-%, bevorzugt 1 bis 40 Gew.-%.

Als Erdalkalicarbonat ist Calciumcarbonat besonders geeignet. Als Palladiumsalz eignet sich insbesondere Palladiumchlorid. Als Lösungsmittel für die Reduktion und/oder Hydrierung kommen solche flüssigen organischen Verbindungen oder deren Mischungen in Frage, die unter den Reaktionsbedingungen der Reduktion und/oder Hydrierung inert sind und den Katalysator nicht nachteilig beeinflussen, insbesondere Ketone wie Aceton, Methylethylketon, Methylisopropylketon, Diisopropylketon, 2- oder 3-Pentanon, Cyclohexanon, bevorzugt Aceton und Methylethylketon, Ether wie Tetrahydrofuran, Dioxan, Anisol oder Ethylenglykolmonomethylether, bevorzugt Tetrahydrofuran und Anisol und aromatische Kohlenwasserstoffe wie Benzol, Toluol oder Xylol.

Sowohl die ungesättigten als auch die partiell oder vollhydrierten Polymeren sollen im verwendeten Lösungsmittel löslich sein.

Das Hydrierungsvefahren eignet sich insbesondere zur Hydrierung von Copolymeren aus 85 bis 50 Gew.-%, bevorzugt 82 bis 55 Gew.-%, zumindest einem konjugierten Dien, 15 bis 50 Gew.-%, vorzugsweise 18 bis 45 Gew.-%, zumindest einem ungesättigten Nitril und 0 bis 10 Gew.-%, bevorzugt 0 bis 8 Gew.-%, zumindest einem weiteren, mit den konjugierten Dienen und ungesättigten Nitrilen copolymerisierbaren Monomeren.

Als konjugierte Diene kommen beispielsweise Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomere kommen Vinylaromaten wie Styrol, o-, m- oder p-Methylstyrol, Ethylstyrol, Vinylnaphthalin und Vinylpyridin, α-β-ungesättigte Monocarbonsäuren mit 3 bis 5 C-Atomen wie Acrylsäure, Methacrylsäure und Crotonsäure sowie α-β-ungesättigte

Dicarbonsäuren mit 4 bis 5 C-Atomen wie Malein-, Fumar-, Citracon- und Itaconsäure, ferner N-Methylolacrylamid und Vinylalkylether mit 1 bis 4 C-Atomen im Alkylteil in Betracht.

Vorzugsweise wird ein binäres Copolymer aus Butadien und Acrylnitril hydriert.

Das Molekulargewicht der Polymeren ist nicht kritisch und liegt Zwischen 500 und 500 000 g/mol, bevorzugt zwischen 1000 und 200 000 g/mol und insbesondere zwischen 30 000 und 150 000 g/mol (Zahlenmittel, ermittelt durch Gelpermeationschromatographie).

Das nitrilgruppenhaltige Polymer kann beispielsweise linear, verzweigt oder sternformig und in der Monomerabfolge beliebig aufgebaut sein, beispielsweise statistisch, alternierend oder blockartig und nach irgendeiner Herstellungsmethode, beispielsweise der Emulsions oder Lösungspolymerisation, synthetisiert werden.

Die Hydriergrade (Prozentsatz der hydrierten CC-Doppelbindungen bezogen auf die Gesamtzahl der ursprünglich im Polymer vorhandenen CC-Doppelbindungen) können bis 100 % betragen. Die Hydrierung kann jedoch erforderlichenfalls vorher abgebrochen werden. Bevorzugt werden Polymerisate mit Hydriergraden von über 80 %, insbesondere von über 90 %, vorzugsweise von über 95 % und ganz besonders bevorzugt von über 99 % nach dem erfindungsgemäßen Verfahren erhalten. Der Hydriergrad wird IRund NMR-spektroskopisch bestimmt, Die Hydrierung wird bei 0 bis 200°C, vorzugsweise bei 5 bis 150°C, insbesondere bei 10 bis 100°C und 1 bis 350 bar, vorzugsweise 5 bis 250 bar Wasserstoffdruck durchgeführt.

Nach der Hydrierung kann der Katalysator nach üblichen Methoden aus der Losung abgetrennt werden, beispielsweise durch Filtrieren oder Zentrifugieren. Die Isolierung des Polymeren aus der Lösung erfolgt nach bekannten Methoden, z. B. durch Eindampfen, gegebenenfalls im Vakuum, durch Einblasen von Wasserdampf oder durch Zugabe eines Nichtlösungsmittels. Zur Entfernung von Restlösungsmittel oder Wasser kann sich gegebenenfalls eine Trocknung anschließen.

Die erfindungsgemäß erhaltenen hydrierten Polymeren konnen in üblicher Weise durch eine Peroxid-, Strahlenoder Schwefelvulkanisation gehärtet werden. Aufgrund ihrer ausgezeichneten Wetter-, Ozon-, Öl- und Heißluftbeständigkeit sowie Beständigkeit gegenüber kaltem Klima können diese Polymeren für hochwertige Gummiartikel wie Dichtungen, Schläuche, Membranen, Kabelisolationen und Kabelmäntel eingesetzt werden.

## Beispiel 1

Eine Lösung von 37,4 g eines Acrylnitril-Butadien-Copolymers, hergestellt durch Emulsionspolymerisation, mit 34,9 Gew.-%, Acrylnitrilgehalt und einer Mooney-Viskosität ML 1+4 (100°C) von 29 ME in 337 g Aceton und 3,74 g Hydrierkatalysator (5 Gew.-%. Pd/CaCO₃, Typ K-0207 der Firma Heraeus, oxidische Form, spezifische Oberfläche ca. 15 m2/g, Edelmetalloberfläche ca. 3 m2/g, Katalysatorteilchendurchmesser (150 μm) wurde in einem 0,7 1-Autoklaven vorgelegt. Der Autoklav wurde mehrmals mit Stickstoff gespült. Man heizte auf 50°C, drückte 50 bar Wasserstoff auf und hydrierte 4 Stunden. Dann zentrifugierte man den Katalysator ab. Der Hydriergrad betrug 98,5 %.

## Beispiel 2

Beispiel 1 wurde mit 7,48 g Katalysator 5 Gew.-% Pd/CaCO₃, oxidische Form, spezifische Oberfläche ca. 10 m2/g, Katalysatorteilchendurchmesser (31 μm (Typ E 406 N/D der Firma Degussa) wiederholt. Der Hydriergrad betrug 99,1 %.

## Beispiel 3

Beispiel 2 wurde mit 3,74 g Katalysator und einem Acrylnitril-Butadien-Copolymer mit 39,9 Gew.-% Acrylnitrilgehalt und einer Mooney-Viskosität ML 1+4 (100°C) von 46 ME wiederholt. Der Hydriergrad betrug 98,8 %.

## Beispiel 4

Beispiel 3 wurde mit einem Acrylnitril-Butadien-Copolymer mit 28,1 Gew.-% Acrylnitrilgehalt und einer Mooney-Viskosität ML 1+4 (100°C) von 45 ME wiederholt. Der Hydriergrad betrug 93,4 %.

## Beispiel 5

Beispiel 1 wurde mit 1,87 g Katalysator bei 150 bar Wasserstoffdruck wiederholt. Der Hydriergrad wurde zu 94 % bestimmt.

## Beispiel 6

Beispiel 1 wurde mit 1,87 g Katalysator bei 35°C wiederholt. Der Hydriergrad betrug 95 %.

**Beispiel 7**

Beispiel 2 wurde mit einer Losung von 56,1 g Polymer in 318 g Aceton und 11,22 g Katalysator wiederholt. Es ergab sich ein Hydriergrad von 90,5 %.

**Beispiel 8**

Beispiel 2 wurde mit 1,87 g Katalysator bei 60°C wiederholt. Der Hydriergrad wurde zu 93,2 % bestimmt.

**Beispiel 9**

Beispiel 2 wurde mit 1,87 g Katalysator bei 10 bar Wasserstoffdruck wiederholt. Es wurde ein Hydriergrad von 83,3 % ermittelt.

**Patentansprüche**

1. Verfahren zur heterogenen katalytischen Hydrierung nitrilgrüppenhaltiger ungesättigter Polymerer in Lösung bei 0 bis 200°C und 1 bis 350 bar Wasserstoffdruck unter Erhalt der Nitrilgruppen, dadurch gekennzeichnet, daß als Hydrierkatalysator Palladium auf Erdalkalicarbonaten Verwendet wird, daß die spezifische Oberfläche (BET) des Katalysators kleiner als 100 m2/g ist und daß die Menge des auf dem Erdalkalicarbonat niedergeschlagenen Palladiums 0,01 bis 20 Gew.-% und die Konzentration an Katalysator (berechnet als Palladium), bezogen auf Polymer, 5 bis 20.000 ppm beträgt.

2. Verfahren nach Anspruch 1, dadurch gekennzeichnet, daß als Erdalkalicarbonat Calciumcarbonat verwendet wird.

3. Verfahren nach Anspruch 1, dadurch gekennzeichnet, daß sowohl die ungesättigten als auch die partiell oder vollhydrierten Polymeren im Verwendeten Lösungsmittel löslich sind.

4. Verfahren nach Anspruch 1, dadurch gekennzeichnet, daß Copolymere aus 85 bis 50 Gew.-% zumindest einem konjugierten Dien, 15 bis 50 Gew.-% zumindest einem ungesättigten Nitril und 0 bis 10 Gew.-% zumindest einem weiteren, mit den konjugierten Dienen und ungesättigten Nitrilen copolymerisierbaren Monomeren hydriert werden.

5. Verfahren nach Anspruch 1, dadurch gekennzeichnet, daß Copolymere aus 82 bis 55 Gew.-% zumindest einem konjugierten Dien, 18 bis 45 Gew.-% zumindest einem ungesättigten Nitril und 0 bis 8 Gew.-% zumindest einem weiteren, mit den konjugierten Dienen und ungesättigten Nitrilen copolymerisierbaren Monomeren hydriert werden.

6. Verfahren nach Anspruch 1, dadurch gekennzeichnet, daß das Polymere aus Butadien und Acrylnitril besteht und ein Molekulargewicht zwischen 500 und 500 000 g/mol (Zahlenmittel) aufweist.

7. Verfahren nach Anspruch 1, dadurch gekennzeichnet, daß der Hydriergrad über 80 % beträgt.

8. Verfahren nach Anspruch 1, dadurch gekennzeichnet, daß der Hydriergrad über 90 % beträgt.

**Claims**

1. A process for the heterogeneous catalytic hydrogenation of unsaturated polyesters containing nitrile groups in solution at 0 to 200°C and 1 to 350 bar hydrogen pressure with the nitrile groups remaining intact, characterized in that palladium on alkaline earth carbonates is used as the hydrogenation catalyst, in that the specific surface (BET) of the catalyst is smaller than 100 m2/g and in that the quantity of palladium deposited on the alkaline earth carconate is between 0.01 and 20 % by weight and the concentration of catalyst (expressed as palladium), based on polymer, is from 5 to 20,000 ppm.

2. A process as claimed in claim 1, characterized in that calcium carbonate is used as the alkaline earth carbonate.

3. A process as claimed in claim 1, characterized in that both the unsaturated polymers and also the partially or completely hydrogenated polymers are soluble in the solvent used.

4. A process as claimed in claim 1, characterized in that copolymers of 85 to 50 % by weight of at least one conjugated diene, 15 to 50 % by weight of at least one unsaturated nitrile and 0 to 10 % by weight of at least one other monomer copolymerizable with the conjugated dienes and unsaturated nitriles are hydrogenated.

5. A process as claimed in claim 1, characterized in that copolymers of 82 to 55 % by weight of at least one conjugated diene, 18 to 45 % by weight of at least one unsaturated nitrile and 0 to 8 % by weight of at least one other monomer copolymerizable with the conjugated dienes and unsaturated nitriles are hydrogenated.

6. A process as claimed in claim 1, characterized in that the polymer consists of butadiene and acrylonitrile and has a molecular weight of from 500 to 500,000 g/mol (number average).

7. A process as claimed in claim 1, characterized in that the degree of hydrogenation is more than 80 %.

8. A process as claimed in claim 1, characterized in that the degree of hydrogenation is more than 90 %.

## Revendications

1. Procédé pour l'hydrogénation catalytique hétérogène de polymères insaturés contenant des groupes nitrile en solution à des températures de 0 à 200°C et des pressions d'hydrogène de 1 à 350 bars avec conservation des groupes nitrile, caractérisé en ce que l'on utilise en tant que catalyseur d'hydrogénation le palladium sur des carbonates de métaux alcalino-terreux, en ce que la surface spécifique (BET) du catalyseur est inférieure à 100 m$^2$/g et en ce que la quantité de palladium déposée sur le carbonate de métal alcalino- terreux est de 0,01 à 20 % en poids et la concentration du catalyseur (exprimée en palladium) de 5 à 20 000 ppm par rapport au polymère.

2. Procédé selon la revendication 1, caractérisé en ce que le carbonate de métal alcalino-terreux utilisé est le carbonate de calcium.

3. Procédé selon la revendication 1, caractérisé en ce que les polymères, aussi bien insaturés que partiellement ou totalement hydrogénés, sont solubles dans le solvant utilisé.

4. Procédé selon la revendication 1, caractérisé en ce que l'on hydrogène des copolymères consistant en 85 à 50 % en poids d'au moins un diène conjugué, 15 à 50 % en poids d'au moins un nitrile insaturé et 0 à 10 % en poids d'au moins un autre monomère copolymérisable avec les diènes conjugués et les nitriles insaturés.

5. Procédé selon la revendication 1, caractérisé en ce que l'on hydrogène des copolymères consistant en 82 à 55 % en poids d'au moins un diène conjugué, 18 à 45 % en poids d'au moins un nitrile insaturé et 0 à 8 % en poids d'au moins un autre monomère copolymérisable avec les diènes conjugués et les nitriles insaturés.

6. Procédé selon la revendication 1, caractérisé en ce que le polymère consiste en butadiène et acrylonitrile et a un poids moléculaire de 500 à 500 000 g/mol (moyenne en nombre).

7. Procédé selon la revendication 1, caractérisé en ce que le taux d'hydrogénation est supérieur à 80 %.

8. Procédé selon la revendication 1, caractérisé en ce que le tau x d'hydrogénation est supérieur à 90 %.